# EUROPÄISCHE PATENTANMELDUNG

(11) **EP 2 045 003 A1**
(43) Veröffentlichungstag der Anmeldung: **08.04.2009**
(21) Anmeldenummer: 08163850.4
(22) Anmeldetag: 08.09.2008
(51) Int. Cl.: B01F 3/18, B01F 13/02, B01F 13/10, B29C 47/10, B65G 53/24, B65G 53/60, B65G 53/66, B01F 15/00

(54) **Einrichtung zum Fördern und Mischen von Schüttgut**

(30) Priorität: 27.09.2007 DE 102007046622
(71) Anmelder: MANN + HUMMEL ProTec GmbH, 64625 Bensheim (DE)
(72) Erfinder: Rodinger, Frank, 63500 Seligenstadt (DE)
(74) Vertreter: Voth, Gerhard

(57) **Zusammenfassung**

Die Erfindung beschreibt eine Einrichtung zum Fördern und Mischen von Schüttgut mit Förderluft, aufweisend eine Misch- und Förderstation (10) und wenigstens ein Förderrohr (17,18) zum Zuführen des zu fördernden Schüttgutes. Die Misch- und Förderstation ist mit einem Unterdruckschlauch (23) oder -rohr verbunden, welcher an einem Unterdruck erzeugenden System (24) angeordnet ist. Innerhalb der Misch- und Förderstation befindet sich ein Sieb (21) zur Trennung des Fördergutes von der Förderluft, dessen Sieböffnungen dem gewünschten Abscheidegrad zur Abscheidung des Mischgutes von der Förderluft entsprechen. Über das Förderrohr strömt bei Anliegen eines Unterdruckes Luft in das Mischgut ein, so wird eine Vermischung und Entstaubung des Mischgutes bewirkt.

## Beschreibung

### Technisches Gebiet

Die Erfindung betrifft eine Einrichtung zum Fördern und Mischen von Schüttgut.

### Stand der Technik

Aus der DE 40 29 902 sind eine Einrichtung und ein Verfahren zum Fördern und Mischen von Schüttgut bekannt. Hierfür ist ein nach unten sich verjüngender Behälter mit einer Bodenverschlussplatte vorgesehen, bei dem ein außerhalb des Behälters angeordnetes Saugfördergebläse einen Unterdruck im Behälter erzeugt. Über ein Förderrohrsystem wird das zu fördernde Schüttgut zugeführt. Im Stand der Technik sind mindestens zwei Förderrohre innerhalb des Förderrohrsystems vorgesehen, die jeweils ein Förderventil aufweisen. Mit der genannten Einrichtung kann eine Durchmischung des Schüttgutes vorgenommen werden. Weitere Funktionen erfüllt diese Fördereinrichtung nicht.

Es ist ferner aus der DE OS 20 26 337 ein Verfahren zum Vermischen einer pulverförmigen Grundsubstanz mit gleichartigen Zusatzstoffen bekannt. Bei diesem Verfahren wird zunächst die Grundsubstanz im Saugluftstrom durch einen Zuführungsstutzen in den Behälter gefördert. Nachdem die abgesetzte Schicht im Behälter eine bestimmte Höhe erreicht hat, um eine ausreichende Drosselung zu bewirken, wird ein Absperrorgan geöffnet, und es setzt die Ansaugung der vom Dosiergerät in den Trichter abgegebenen Zusatzstoffe ein. Die mit den Zusatzstoffen beladene Trägerluft tritt aus der Mündung aus und steigt durch die darüber befindlichen Substanzschichten in feiner Verteilung nach oben, wobei sie die Zusatzstoffe allmählich an die Grundsubstanz abgibt. Eine Durchmischung oder Verwirbelung der Substanzen untereinander findet nicht statt.

Es ist weiterhin aus der DE 25 44 716 A1 eine Saugförderanlage mit einem pneumatischen Mischer bekannt. Die Komponenten werden getrennt gefördert und verwogen und liegen nach Abschluss eines Förderzyklus schichtweise übereinander. Nach dem vollständigen Zuführen der Komponenten wird über ein entsprechendes Belüftungsventil eine pneumatische Durchmischung der Komponenten durchgeführt. Dies erfordert mehrere Verfahrensschritte, die nacheinander ablaufen, so dass eine relativ lange Förder- und Mischzeit benötigt wird.

Der Erfindung liegt die Aufgabe zugrunde, die genannten Nachteile zu vermeiden und eine Einrichtung zum Fördern und Mischen von Schüttgut zu schaffen, welche sich durch einen einfachen Aufbau auszeichnet und einerseits eine zuverlässige Durchmischung des Schüttgutes gewährleistet, andererseits das Schüttgut derart aufbereitet, dass eine optimale Verarbeitung in einer nachfolgenden Verarbeitungsmaschine gewährleistet ist.

### Offenbarung der Erfindung

Der wesentliche Vorteil der Erfindung liegt darin, dass nicht nur eine Durchmischung des Schüttgutes erfolgt, sondern gleichzeitig auch eine Entstaubung des Schüttgutes erzielt wird. Hierzu ist ein Sieb im Bereich der Luftabsaugung vorgesehen, das entsprechende Öffnungen aufweist, so dass evtl. in dem Mischgut enthaltener Staub durch diese Öffnungen entweicht und abgesaugt werden kann, so dass hier eine zusätzliche Funktion Entstauben entsteht.

Das zu verarbeitende Material, d. h. das Mischgut, wird entweder direkt aus Behältern angesaugt und der Misch- und Fördereinrichtung zugeführt oder aus Schneidmühlen oder Schredder der Misch- und Fördereinrichtung zugeführt. Durch die Vermischung des Materials und die Absaugung der Luft wird das Material aufgewirbelt und durchmischt. Gleichzeitig lösen sich unerwünschte Feinanteile aus der Materialmischung und können abgesaugt werden. Der Entstaubungsgrad wird mithilfe von unterschiedlichen Sieben bestimmt, die in der Misch- und Förderstation eingesetzt werden können.

Ein weiterer wesentlicher Vorteil der Erfindung liegt darin, dass die verschiedenen Vorgänge, wie Fördern, Dosieren, Mischen und Entstauben, in einem Gerät kosteneffizient durchgeführt werden. Damit werden Spritzgieß- und Extrusionsprozesse weniger zeitaufwendig, da die Materialaufbereitung parallel erfolgt und sehr sauberes Material zum Einsatz kommt. Durch das homogene Mischungsverhältnis unterschiedlicher Materialkomponenten werden minderwertige Teile oder gar Ausschuss reduziert und die Produktqualität gesteigert. Eine Nesterbildung durch Staub oder Feinteile wird wirksam unterbunden.

Ein weiterer wesentlicher Vorteil besteht darin, dass die vorhandenen Filtersysteme nicht verstopfen und dass sich weniger Feinteile im zu fördernden Material befinden, somit ein homogener Arbeitsprozess gewährleistet ist.

In vorteilhafter Weise wird dieses Verfahren beim Mischen von Kunststoffgranulat und Zuführen von Kunststoffgranulat in eine Kunststoffspritzgießmaschine angewendet.

Weiterbildungsgemäß ist ein Ventil an einem Förderrohr vorgesehen. Über dieses Ventil lässt sich Luft zum Mischen und Entstauben zuführen, wobei eine zeit- und mengenabhängige Steuerung oder Regelung möglich ist.

Gemäß einer Alternative ist ein Zuluftrohr zum Zuführen von Luft zum Vermischen und Entstauben an der Förderstation vorgesehen. Dieses Zuluftrohr ist mit einem Ventil ausgestattet, mit dem die Mischzeit, d. h. die Zeit zum Zuführen von Luft und gleichzeitig auch die Menge der zugeführten Luft, einstellbar ist.

Weiterbildungsgemäß ist die Misch- und Förderstation mit einer Bodenverschlussklappe versehen. Über diese wird das Mischgut abgeleitet und beispielsweise einer Kunststoffspritzgießmaschine oder ganz allgemein einer Verarbeitungsstation zugeführt.

Eine Ausgestaltung der Erfindung sieht vor, ein weiteres Förderrohr zum Fördern einer weiteren Komponente des Schüttgutes vorzusehen. Damit können parallel oder nacheinander zwei verschiedene Produkte der Misch- und Fördereinrichtung zugeführt werden. Beispielsweise kann durch ein Förderrohr ein Kunststoffgranulat in Form von Neuware, durch ein weiteres Förderrohr ein Kunststoffmahlgut zugeführt werden. Gerade bei Mahlgut ist der Staubanteil relativ hoch, so dass die Entstaubung die Qualität des Mahlgutes und die Qualität des gesamten Schüttgutes erheblich verbessert.

Der Misch- und Fördereinrichtung ist ein Unterdruck erzeugendes System nachgeordnet. Dieses besteht aus einem Sauggebläse sowie einem Aufnahmebehälter für den ausgetragenen Staub. Zwischen dem Sauggebläse und dem Aufnahmebehälter ist ein Filter in Form eines Filterelementes oder eines Zyklonabscheiders vorgesehen. An dieser Stelle wird der Staub von der Förderluft getrennt. Auch der Staubsammelbehälter weist eine Bodenschlussklappe auf, um den darin angesammelten Staub zu entsorgen oder abzuleiten.

Die Misch- und Fördereinrichtung wird gemäß einer weiteren vorteilhaften Ausgestaltung der Erfindung als kompakte Einheit direkt oder indirekt auf Verarbeitungsmaschinen, wie z. B. Spritzgießmaschinen, Blasformmaschinen oder andere Kunststoff verarbeitende Maschinen, aufgesetzt. Es besteht auch die Möglichkeit, die Einrichtung, mit welcher die Entstaubung von Kunststoffgranulat durchgeführt wird, als eigenständige Einheit oder als zusätzliche Entstaubungsanlage bei der Kunststoffförderung und Kunststoffverarbeitung einzusetzen.

Diese und weitere Merkmale gehen nicht nur aus den Ansprüchen, sondern auch aus der Beschreibung und den Zeichnungen hervor.

### Kurze Beschreibung der Zeichnungen

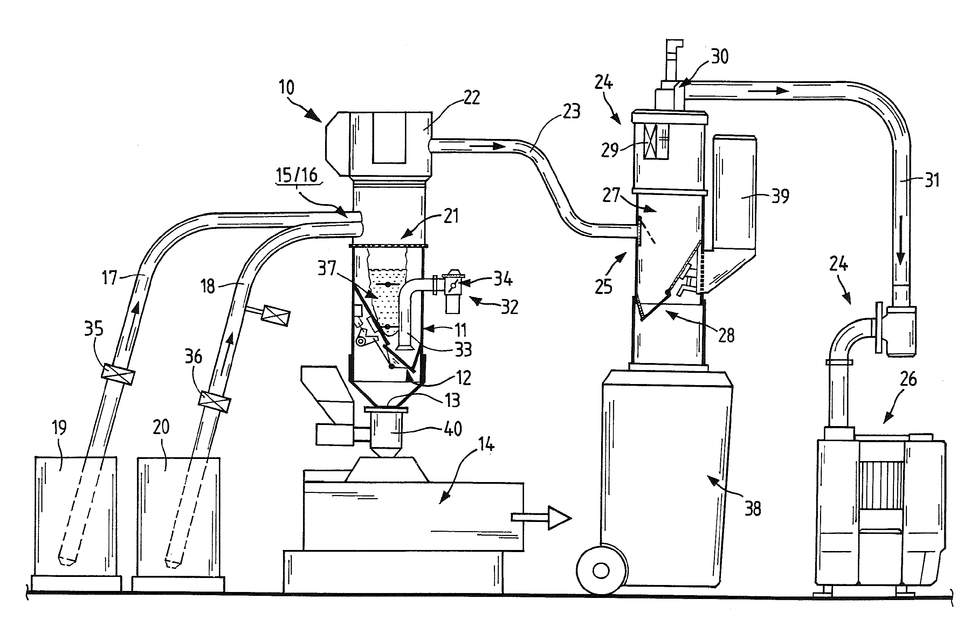

Die Erfindung wird nachfolgend anhand eines Ausführungsbeispiels erläutert. Die Figur zeigt ein Multifunktionsgerät zum Fördern, Mischen und Entstauben von Kunststoffgranulat.

### Ausführungsform(en) der Erfindung

Gemäß der Figur ist eine Misch- und Fördereinrichtung 10 vorgesehen, bestehend aus einem Behälter 11, der mit einer Bodenverschlussklappe 12 versehen ist, und einem Auslauf 13, der unterhalb der Bodenverschlussklappe angeordnet ist. Der Auslauf 13 ist mit einer Kunststoffverarbeitungseinheit 14, beispielsweise einer Dosierschnecke für eine Kunststoffspritzgießanlage, verbunden. Zwischen der Kunststoffverarbeitungseinheit 14 und dem Auslauf 13 kann optional ein hier schematisch angedeutetes Dosiergerät 40 zum Zudosieren von weiterem Material vorgesehen sein. Der Behälter 11 weist Öffnungen 15, 16 auf, an denen sich jeweils ein Förderrohr 17, 18 befindet. Die Förderrohre 17, 18 erstrecken sich bis in jeweils einen Behälter 19, 20, in denen sich Kunststoffgranulat befindet. Dieses Kunststoffgranulat kann Neuware oder auch Mahlgut sein. Oberhalb der Öffnungen 15, 16 des Behälters 11 ist ein Sieb 21 vorgesehen. Über dem Sieb ist eine Absaugkammer 22 angeordnet, die mit einem Unterdruckschlauch 23 in Verbindung steht. Der Unterdruckschlauch 23 führt zu einem Unterdruck erzeugenden System 24, das aus einem Staubabscheider 25 und einem Unterdruckgebläse 26 besteht.

Der Staubabscheider 25 ist nach Art eines üblichen Staubsaugers aufgebaut, d. h. er weist einen Staubsammelbehälter 27 auf, der mit einer Verschlussklappe 28 zum Austragen des angesammelten Staubes versehen ist. Im oberen Bereich ist der Staubabscheider 25 mit einer Filterpatrone 29 ausgestattet, die den Staubsammelraum oder Rohluftraum vom Reinluftraum 30 trennt. Der Reinluftraum ist mit einer Reinluftleitung 31 versehen. Diese führt zu dem Unterdruckgebläse 26, welches letztendlich dafür sorgt, das in den Behältern 19, 20 vorhandene Schüttgut dem Behälter 11 zugeführt wird und andererseits die staubhaltige Luft gereinigt wird. Am Behälter 11 ist ferner eine Fremdluftzufuhr 32, bestehend aus einem in das Schüttgut hineinragenden Rohr 33 und einem das Rohr 33, welches sich durch den Behälter 11 nach außen erstreckt, abschließendes Ventil 34.

Die Funktionsweise des Multifunktionsgerätes wird nachfolgend beschrieben:
- Nach dem Einschalten des Unterdruckgebläses 26 wird aus dem Behälter 19 oder 20 oder gleichzeitig aus beiden Behältern je nach Stellung des Verschlussventils 35, 36 Kunststoffgranulat oder Mahlgut in die Misch- und Fördereinrichtung 10 transportiert. Das Mahlgut setzt sich auf der Bodenverschlussklappe auf und füllt diesen Behälter bis zu einer bestimmten maximalen Füllhöhe. Zum Durchmischen und Entstauben wird - gleichzeitig oder nachdem die Ventile 35, 36 geschlossen sind - das Ventil 34 geöffnet, so dass Fremdluft einströmt und für eine Durchmischung und gleichzeitig eine Entstaubung des im Behälter befindlichen Schüttgutes 37 sorgt. Damit kein Schüttgut in den Unterdruckschlauch 23 bzw. in die Absaugkammer 22 gelangen kann, ist ein Sieb 21 vorgeschaltet. Dieses Sieb hat eine Maschenweite, die einerseits das Austragen von Staub in die Absaugkammer 22 zulässt, andererseits das Austragen von Schüttgut ab einer bestimmten Korngröße unterbindet. Hierzu besteht die Möglichkeit, das Sieb mit unterschiedlichen Maschenweiten auszustatten bzw. unterschiedliche Siebe in die Misch- und Fördereinrichtung einzusetzen. Nachdem eine ausreichende Durchmischung des Schüttgutes stattgefunden hat und gleichzeitig dieses entstaubt ist, wird das Ventil 34 geschlossen. Durch Öffnen der Bodenverschlussklappe 12 kann das Schüttgut der Kunststoffverarbeitungseinheit 14 zugeleitet werden. Der von der Misch- und Fördereinrichtung 10 abgesaugte Staub gelangt zu dem Staubabscheider 25, wird dort im Staubsammelbehälter 27 gesammelt und kann über die Verschlussklappe 28 nach unten zu einem Staubbehälter 38 geführt werden. Der Staub wird durch eine Filterpatrone 29, wie bei einem Staubsauger üblich, zurückgehalten. Die Filterpatrone sorgt dafür, dass dem Unterdruckgebläse 26 nur Reinluft zugeführt wird, die anschließend in die Atmosphäre entlassen werden kann. An dem Staubabscheider 25 ist ein Ausgleichsfilter 39 zum Druckausgleich vorgesehen. Beim Entstauben des Schüttgutes 27 lässt sich durch ein mehr oder weniger starkes Öffnen des Ventils 34 die zugeführte Luftmenge steuern, d. h. es erfolgt eine intensivere oder weniger intensive Durchwirbelung des Schüttgutes, je nach Art des im Behälter 11 befindlichen Materials.

## Patentansprüche

1. Einrichtung zum Fördern und Mischen von Schüttgut mit Förderluft, aufweisend eine Misch- und Förderstation, wenigstens ein Förderrohr zum Zuführen des zu fördernden Schüttgutes, wobei die Misch- und Förderstation mit einem Unterdruckschlauch oder -rohr verbunden ist und der Unterdruckschlauch oder -rohr an einem Unterdruck erzeugenden System angeordnet ist, **dadurch gekennzeichnet, dass** sich innerhalb der Misch- und Förderstation zur Trennung des Fördergutes von der Förderluft ein Sieb befindet, dessen Sieböffnungen dem gewünschten Abscheidegrad zur Abscheidung des Mischgutes von der Förderluft entspricht und wobei über das Förderrohr bei Anliegen eines Unterdruckes Luft in das Mischgut einströmt und eine Vermischung des Mischgutes und eine Entstaubung des Mischgutes bewirkt.

2. Einrichtung zum Fördern und Mischen von Schüttgut mit Förderluft, **dadurch gekennzeichnet, dass** ein Zuluftrohr an der Misch- und Förderstation vorgesehen ist, mit einem Ventil zum Schließen und Öffnen des Zuluftrohres und die Menge des eingeleiteten Gases über dieses Zuluftrohr und die Zeit der Zuführung des Gases über das Ventil einstellbar ist.

3. Einrichtung nach Anspruch 1, **dadurch gekennzeichnet, dass** an dem Förderrohr ein Ventil zum Zuführen von Luft vorgesehen ist und die Zeit zur Zuführung von Gas als auch die Menge des zugeführten Gases über dieses Ventil einstellbar ist.

4. Einrichtung zum Fördern und Mischen von Schüttgut, **dadurch gekennzeichnet, dass** die Misch- und Förderstation eine Bodenverschlussklappe zum Ableiten des Mischgutes aus der Misch- und Förderstation zu einer Verarbeitungsstation aufweist.

5. Einrichtung nach einem der vorherigen Ansprüche, **dadurch gekennzeichnet, dass** ein weiteres Förderrohr an der Misch- und Förderstation zum Fördern einer weiteren Komponenten eines Schüttgutes angeschlossen ist.

6. Einrichtung nach einem der vorherigen Ansprüche, **dadurch gekennzeichnet, dass** das Unterdruck erzeugende System einen Filter in Form eine Filterelementes oder eines Zyklonabscheiders zum Trennen des aus der Misch- und Förderstation abgeleiteten Staubes und Luft aufweist.

7. Einrichtung nach Anspruch 6, **dadurch gekennzeichnet, dass** das Unterdruck erzeugende System eine Bodenverschlussklappe zum Ableiten des angesammelten Staubes aufweist.

8. Einrichtung nach einem der vorherigen Ansprüche, **dadurch gekennzeichnet, dass** die Misch- und Förderstation als kompakte Einheit direkt oder indirekt auf eine Verarbeitungsmaschine, insbesondere eine Spritzgießmaschine, gesetzt werden kann.

9. Einrichtung nach einem der vorherigen Ansprüche, **dadurch gekennzeichnet, dass** die Misch- und Förderstation als eigenständige Einheit in Form einer zusätzlichen Entstaubungsanlage bei einem Fördersystem für das Fördern von Schüttgut einsetzbar ist.

10. Einrichtung nach einem der vorherigen Ansprüche, **dadurch gekennzeichnet, dass** für das Sieb und/oder das Filtersystem des Unterdruck erzeugenden Systems eine Druckimpulsabreinigung vorgesehen ist.
